Europäisches Patentamt

European Patent Office

Office européen des brevets

(19)

(11) Publication number: **0 084 295**
**A2**

(12) **EUROPEAN PATENT APPLICATION**

(21) Application number: 82830200.0

(22) Date of filing: 07.07.82

(51) Int. Cl.³: **B 60 T 17/08**
**F 16 D 65/56**

(30) Priority: 15.01.82 IT 6704282

(43) Date of publication of application:
27.07.83 Bulletin 83/30

(84) Designated Contracting States:
AT BE CH DE FR GB IT LI LU NL SE

(71) Applicant: WABCO WESTINGHOUSE COMPAGNIA
FRENI S.p.A.
Via Pier Carlo Boggio 20
I-10138 Torino(IT)

(72) Inventor: Casalone, Enrico
Strada San Mauro 139
I-10156 Torino(IT)

(72) Inventor: Barberis, Dario
Via D'Arborea 8
I-10137 Torino(IT)

(74) Representative: Jacobacci, Filippo et al,
c/o JACOBACCI-CASETTA & PERANI S.n.c. Via Alfieri, 17
I-10121 Torino(IT)

(54) **Fluid pressure actuator with a spring-intervention device for the brakes of railway vehicles and the like.**

(57) An actuator for railway vehicle brakes comprises a casing (12) defining a cylinder (68) in which is slidable, under the effect of fluid under pressure, a piston (32) driving a rod member (22) displaceable axially through one end of the casing to actuate brake means. The actuator is provided with spring-intervention means (90, 92, 100, 106) for effecting the advancement of the rod member (22) to achieve parking or emergency braking automatically. The spring-intervention means are interposed between the cylinder (68) in which the piston (32) is slidable and the end (16) of the casing (12) through which the rod member (22) passes, and cooperates directly with the rod member. Manually-operable releasing means (80, 108) are provided which, in the activated condition of the spring-intervention means, withdraw the rod member (22) by means of a device for taking up the play (42, 46) with which the latter is provided.

./...

EP 0 084 295 A2

Croydon Printing Company Ltd.

"Fluid pressure actuator with a spring-intervention device for the brakes of railway vehicles and the like"

The present invention relates to fluid pressure actuators for railway vehicle brakes and the like.

In particular, the invention concerns an actuator comprising a casing defining a cylinder in which is slidable, under the effect of a fluid under pressure and against the action of resilient return means, a piston which is associated with a rod member displaceable axially through one end of the casing to operate the brake means, the rod member incorporating a lead screw device for automatically taking up the play due to wear of the brake means, and the actuator being further provided with spring-intervention means housed in the casing and arranged to effect the advancement of the rod member to achieve parking or emergency braking automatically, and manually operable releasing means for withdrawing the rod member in the condition of activation of the spring-intervention means.

In a known actuator of the type defined above, described and illustrated in Italian Patent No. 1,025,164, the spring-intervention means comprise a piston slidable, under the effect of resilient thrust means and against the action of a fluid under pressure, in a chamber disposed in series with the cylinder and located at the end of the casing opposite that through which the rod member passes. With this piston is associated a thrust rod arranged to act axially, during activation of the intervention means, against the piston connected to the rod member so as to effect the advancement of the latter. The thrust rod is externally threaded and cooperates with a nut acting as a lead screw nut and movable axially together with the piston. The nut is normally locked against rotation by means of a ratchet catch which can be released from the outside.

A solution of this type has the disadvantage of resulting in a considerable increase in the dimensions of the casing and hence of the entire actuator, and, in addition, is relatively complicated because of the large number of components which make up the spring-intervention device.

The object of the present invention is to avoid these disadvantages and provide an actuator of the type defined initially, which is particularly compact, of limited bulk, and is constituted by a smaller number of components.

According to the invention, this object is achieved by virtue of the fact that the spring-intervention means of the actuator are interposed between the cylinder in which the piston is slidable and the end of the casing through which the rod member is displaceable, and cooperates directly with the latter, and in that the releasing means use the device for taking up the play to withdraw the rod member.

By virtue of this characteristic, the dimensions of the actuator casing may be kept considerably smaller than is the case in conventional actuators which have an axial appendage on the casing for housing the spring-intervention device. Moreover, the solution according to the invention allows the use of a suitable mechanism for achieving the release of the intervention means to be eliminated, since this function is carried out directly by the device for the take up of play with which the rod member is normally provided. Clearly, this contributes to making the actuator less complex and hence less costly, and, at the same time, more reliable.

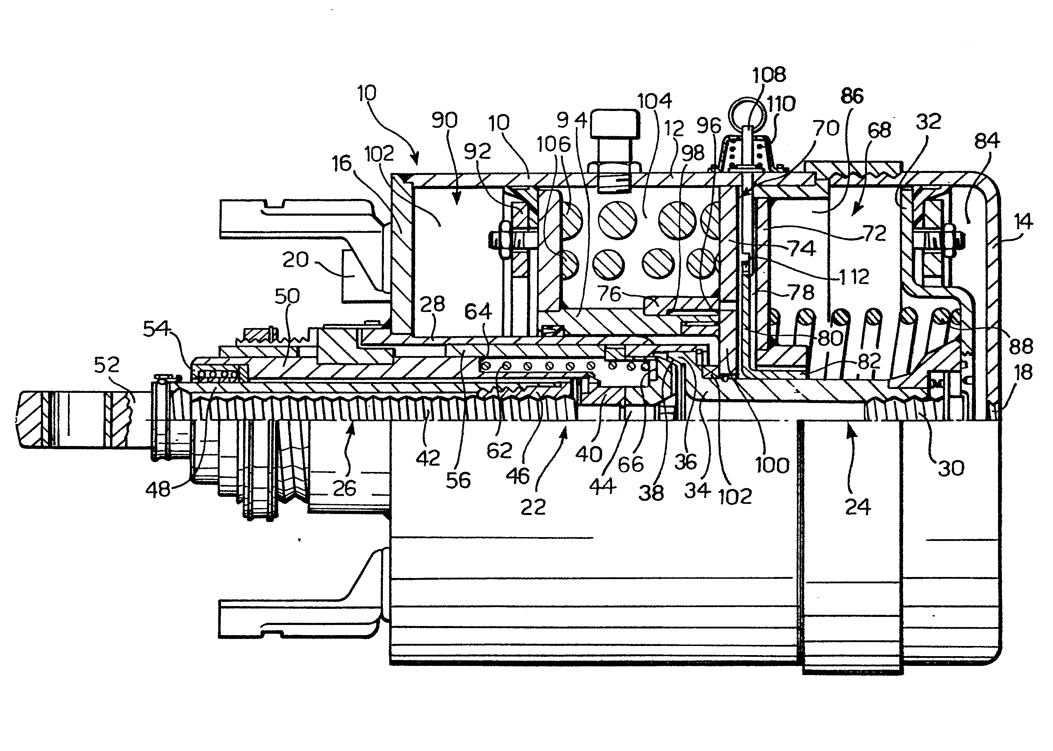

The invention will now be described in detail with reference to the appended drawing, provided purely by way of non-limiting example, which illustrates an actuator for railway vehicle brakes in partial axial section.

Referring to the drawing, a pneumatic actuator for railway vehicle brakes is generally indicated 10. The actuator 10 comprises a cylindrical casing 12 having a base 14 at one end and an annular base 16 at the other end. The two bases 14, 16 are provided with respective tubular inlet unions 18, 20 for connection to a source of air under pressure, as will be clarified below in the course of the description.

A rod member, generally indicated 22, is slidable coaxially in the casing 12 and projects outwardly thereof through the base 16. The rod member 22 comprises essentially an axial internal portion 24 and an axial external portion 26 guided through the base 16 by means of a tubular guide member 28 which is fixed to the base 16 and extends into the cavity of the casing 12.

The axial internal portion 24 is prismatic in shape and has a tang 30 of smaller diameter at one end on which a piston 32 is locked axially with the possibility of rotation, and at the other end has a cylindrical head 34 with a frontal conical surface 36 facing a complementary frontal conical surface 38 of a bush 40 which forms part of the external portion 26 of the rod member 22. In effect, this portion 26 comprises an internal threaded rod 42 with a spaned part 44 at its end facing the head 34, on which the bush 40 is engaged, and an internally threaded sleeve 46 which acts as a lead screw nut and is coupled to a tubular shaft 48 surrounding the threaded rod 42. The shaft 48 is inserted within a tubular guide 50 inserted, in its turn, in a tubular member 56 slidable within the guide tube 28. The shaft 48 supports, at its outer end, an attachment member 52 which serves, in a known manner, for operating a brake shoe or block associated with a wheel of a railway vehicle. Between the hollow shaft 48 and the outer end of the guide 50 is inserted an annular friction member 54 of the type known in itself, and the internal end of the slidable tubular member 56 cooperates with the bush 40 in the manner illustrated.

A helical return spring 62 is interposed between an annular abutment shoulder 64 of the tubular guide 50 and a ring 66 supported rotatably by the bush 40.

As will be clarified below, the screw 42, the nut 46, and the annular friction member 54 constitute a device for automatically taking up the play due to wear of the brake shoe or block operated by the tubular shaft 48.

The piston 32 is sealingly slidable in a cylinder 68 as defined by the end of the cavity of the casing 12 adjacent the base 14. This cylinder 68 is defined at the one end by the base 14 and at the other end by a radial annular partition, generally indicated 70. The partition 70, in fact, comprises an annular wall 72 which faces the piston 32, and an annular wall 74 which faces the base 16 and has an axial tubular projection 76 extending towards the base 16. The walls 72, 74 are spaced from each other and define between them an annular space 78 in which a toothed wheel 80 is rotatably housed with its hub 82 coupled for rotation and sliding movement with the central section of the internal portion 24 of the rod member 22.

The piston 32 subdivides the cylinder 68 into a first chamber 84 which communicates with the inlet union 18, and a second chamber 86 in which a helical compression spring 88 is housed, being interposed axially between the piston 32 and the wall 72 of the intermediate partition 70. The spring 88 biases the piston 32 into the rest position illustrated in the drawing, resisting its axial displacement in the direction of the base 16.

The portion of the cavity of the casing 12 between the wall 74 of the partition 70 and the base 16 defines, with the tubular guide member 28, an annular cylinder 90 in which an annular piston 92 is sealingly slidable. To the piston 92 is fixed a tubular shaft 94 which extends towards the wall 74 and is slidably engaged in the tubular projection 76 of this wall 74.

The free ends of the tubular shaft 94 and the tubular projection 76 are provided with respective annular stop surfaces 96, 98. In addition, a draw ring 100 is fixed to the free end of the tubular shaft 94, which engages the head 34 of the internal portion 24 of the rod member 22 with the interposition of an axial bearing 102, in the manner illustrated.

The annular piston 92 subdivides the cylinder 90 into a first chamber 102, defined by the base 16 and communicating with the tubular inlet union 20, and a second chamber 104 in which are housed two helical springs 106 interposed axially between the annular piston 92 and the wall 74 of the partition 70. The spring 106 urge the piston 92 in the direction of the base 16.

By 108 is shown a stop pin which projects outwardly of the casing 12 in correspondence with the intermediate partition 70 and is manually displaceable radially with respect to the casing 12 against the action of a biassing spring 110. The internal end 112 of the pin 108 extends into the space 78 to cooperate with the toothed wheel 80. When the pin 108 is in the rest position illustrated in the drawing, its end 112 engages the teeth of the wheel 80, locking the latter, and consequently the internal portion 24 of the rod member 22, against rotation. When the pin 108 is pulled outwardly against the action of the spring 110, the end 112 is disengaged from the teeth of the whell 80, releasing the portion 24 for rotation.

The operation of the actuator described above is as follows. During normal operation, the inlet union 20 is permanently connected to a source of air under pressure installed on the railway vehicle, so that the piston 92 is maintained in the position illustrated in the drawing, compressing the springs 106. To effect braking, that is, to bring the brake shoe or block connected to the attachment end 52 of the tubular shaft 48 into contact with the wheel of the vehicle, air is admitted into the chamber 84 under pressure through the tubular inlet union 18. Thus, the piston 32 is thrust in the direction of the partition 70, compressing the spring 88 and displacing the internal portion 24 of the rod member 22 axially. Due to this displacement, the conical coupling surface 36 is brought into contact with the conical coupling surface 38 of the bush 40, and the advancement of the outer portion 26 of the rod member 22 is effected to achieve the braking action. During this stage, the portion 24, and hence the bush 40 and the threaded rod 42, are locked against rotation by means of the toothed wheel 80 and the pin 108.

When the supply of compressed air to the chamber 84 is interrupted, the action of the spring 88 tends to bring the piston 32 into the initial rest condition, illustrated in the drawing. This causes the withdrawal of the internal portion 24 and, under the action of the helical spring 62, of the outer portion 26 of the rod member 22. During this stage, the device for taking up play, constituted by the screw 26, the nut 40, and the annular friction member 54, provides for the recovery of any additional braking movement due to wear of the brake elements, in a known manner.

When there is no pressure within the chamber 102, due to an intentional or accidental breaking of the connection between the inlet union 20 and the source of air under pressure on the vehicle, the springs 106 distend to displace the piston 92 axially in the direction of the base 16. The displacement of the piston 92, through the draw ring 100 and the bearing 102, causes the advancement of the portion 24 and, consequently, of the portion 26 of the rod member 22, thus achieving braking. Under these conditions, the torque resulting from the axial load applied to the threaded rods 42 and the nut 46 through the conical coupling 36, 38 is resisted by the toothed wheel 80 which is locked against rotation by the end 112 of the pin 108.

The interruption of the braking action, that is, the removal of the brake elements from the wheel, may be carried out automatically or manually simply by restoring the connection between the source of air under pressure and the chamber 102. In the second case, it suffices to pull the pin 108 outwardly so as to disengage its end 112 from the teeth of the wheel 80. As a result of this disengagement, the wheel 80, and hence the internal portion 24 of the rod member 22 are freed for rotation, allowing the threaded rod 42 to be screwed back into the nut 46 under the action of the helical spring 62, consequently causing the withdrawal of the tubular shaft 48.

CLAIMS:

1. Actuator for the brakes of railway vehicles and the like, comprising a casing defining a cylinder in which is slidable, under the effect of a fluid under pressure and against the action of resilient return means, a piston which is associated with a rod member displaceable axially through one end of the casing to operate the brake means, the rod member incorporating a lead screw device for automatically taking up the play due to wear of the brake means, and the actuator being further provided with spring-intervention means housed in the casing and arranged to effect the advancement of the rod member to achieve parking or emergency braking automatically, and manually operable releasing means for withdrawing the rod member in the condition of activation of the spring-intervention means, characterised in that the spring-intervention means (90, 92, 100, 106) are interposed between the cylinder (68) in which the piston (32) is slidable and the end (16) of the casing (12) through which the rod member (22) is displaceable, and cooperates directly with the latter, and in that the releasing means use the device (42, 46) for taking up the play to withdraw the rod member (22).

2. Actuator according to Claim 1, characterised in that the cylinder (68) in which the piston (32) is slidable is defined at the end (14) of the casing (12) opposite that through which the rod member (22) is displaceable, and in that an annular chamber (90) is defined in the casing which surrounds the rod member (22) coaxially and is separated from the cylinder (68) by an intermediate radial partition (70) against one face (72) of which act the resilient return means (88) of the piston (32), said annular chamber (90) housing a sealingly slidable annular piston (92) having a hollow shaft (94) with a draw appendage (100) which engages the rod member (22) to effect its advancement under the action of resilient thrust means (106) interposed between the annular piston (92) and the other face (74) of the intermediate radial partition (70).

3. Actuator according to Claim 1 or Claim 2, characterised in that the releasing means comprise a toothed wheel (80) coupled for rotation and sliding movement with the internal end (24) of the rod member (22), and a movable stop pin (108) which engages the teeth of the toothed wheel (80) and is displaceable from the exterior of the casing (12).

4. Actuator according to Claims 2 and 3, characterised in that the intermediate radial partition (70) defines an annular space (78) in which the toothed wheel (80) is inserted rotatably.

0084295